# EUROPÄISCHE PATENTSCHRIFT

(11) **EP 2 698 795 B1**
(45) Veröffentlichungstag und Bekanntmachung des Hinweises auf die Patenterteilung: **11.03.2020**
(21) Anmeldenummer: 12180619.4
(22) Anmeldetag: 16.08.2012
(51) Int. Cl.: H01C 7/12

(54) **Überspannungsableiter**
Surge arrester
Paratonnerre

(43) Veröffentlichungstag der Anmeldung: 19.02.2014
(73) Patentinhaber: Siemens Aktiengesellschaft, 80333 München (DE)
(72) Erfinder: Springborn, Dirk, 12203 Berlin (DE); Sulitze, Markus, 14612 Falkensee (DE)

(56) Entgegenhaltungen:
- DE-A1-102007 010 857
- US-A- 4 352 139

## Beschreibung

Die Erfindung betrifft einen Überspannungsableiter, insbesondere zum Ableiten von Überspannungen.

Zum Schutz gegen Überspannungen ist es bekannt Überspannungsableiter, welche beispielsweise infolge von indirekten oder direkten Blitzeinschlägen in einer Anlage oder bei Schaltüberspannungen den hohen Strom zur Erde ableiten, einzusetzen. Derartige Überspannungsableiter, auch kurz Ableiter genannt, werden beispielsweise in Freileitungen oder Stromversorgungsnetzen parallel zu einem Isolator aufgehängt.

Überspannungsableiter umfassen üblicherweise einen Durchgangswiderstand, insbesondere einen spannungsabhängigen Widerstand, z. B. einen Metalloxid-Widerstand, und eine Trennvorrichtung, welche in einem gemeinsamen Gehäuse angeordnet sind. Das Gehäuse weist Anschlussklemmen für wenigstens einen aktiven Leiter und für die Erdung auf.

Gemäß der EP 1 357 649 B1 dient eine Trennvorrichtung dem Abtrennen eines Überspannungsableiters von Erd- oder Hochspannungspotential durch das Auftrennen einer Verbindung.

Ein gattungsgemäßer Überspannungsableiter ist aus der Druckschrift DE 102007010857 A1 bekannt. Ferner beschäftigt sich die Druckschrift US 4352139 A mit Überspannungsableitern.

Aufgabe der Erfindung ist es, einen Überspannungsableiter anzugeben, welcher eine sichere und einfache Trennung der Trennvorrichtung, insbesondere auch bei kleinen verfügbarem Raum ermöglicht.

Die Aufgabe wird erfindungsgemäß durch die im Patentanspruch 1 angegebenen Merkmale gelöst.

Weiterbildungen der Erfindung sind Gegenstand der Unteransprüche.

Der erfindungsgemäße Überspannungsableiter, insbesondere zum Ableiten von Überspannungen, umfasst ein Gehäuse und eine Trennvorrichtung, wobei das Gehäuse in mindestens zwei Gehäuseteile unterteilt ist und die Trennvorrichtung die Gehäuseteile miteinander verbindet und wobei die Trennvorrichtung dazu ausgebildet ist, bei einem Fehler den aktiven Leiter oder Anschlusspfad durch Trennung der Gehäuseteile zu unterbrechen.

Durch eine solche Zwischenanordnung der Trennvorrichtung und daraus resultierenden geteilten Ausbildung des Überspannungsableiters wird gegenüber herkömmlichen und insbesondere gleich ausgelegten Überspannungsableitern, bei denen die Abtrennvorrichtung gehäuseendseitig angeordnet ist, die Trennvorrichtung weniger mechanisch, insbesondere hinsichtlich wirkender Querkräfte beansprucht. Darüber hinaus hat die Aufteilung des langen Gehäuses in kurze Gehäuseteile den Vorteil, dass die Gehäuseteile nicht den gleichen großen Kräften ausgesetzt sind, wie ein langes einzelnes Gehäuse. Ferner ist ein sicherer Überspannungsschutz bei geringem Platzbedarf ermöglicht.

Die Erfindung ermöglicht integrierte Baueinheit aus Überspannungsableiter und Trennvorrichtung, bei dem der Überspannungsschutz und die mechanische Trennfunktion in einer Baueinheit zusammengefasst sind.

Eine Weiterbildung sieht vor, dass die Trennvorrichtung die Gehäuseteile mittig miteinander verbindet. Hierdurch wird die Trennvorrichtung fast ausschließlich auf Zug beansprucht, so dass eine Trennung der Gehäuseteile bis auf die Trennvorrichtung selbst weitgehend zerstörungsfrei erfolgen kann.

Eine weitere Ausführungsform der Erfindung sieht vor, dass die Gehäuseteile in einem vorgegebenen Winkel kleiner 180° bei geschlossener Trennvorrichtung zueinander angeordnet sind. Durch die Winkelstellung der Gehäuseteile zueinander wird auf einfache Art und Weise ein Längenausgleich bewirkt.

In einer möglichen Ausführungsform ist die Trennvorrichtung am jeweils zugehörigen Gehäuseteil drehbar gelagert sind. Durch die an den äußeren Enden der Gehäuseteile drehbare Lagerung und die an den inneren Enden der Gehäuseteile trennbare Verbindung der Gehäuseteile können die Gehäuseteile bei Auslösung der Trennvorrichtung einfach und sicher voneinander getrennt werden, indem die Gehäuseteile wegschwenken oder wegklappen in Richtung zur Erdungsseite oder zur Spannungsseite. Bedingt durch die gegenüber gleich ausgelegten und ein einziges langes Gehäuse aufweisende Überspannungsableitern kurzen Längen der Gehäuseteile kann der erfindungsgemäße Überspannungsleiter auch bei übereinander angeordneten Leitungen mit geringem Abstand eingesetzt werden.

Mittels der Trennvorrichtung im nicht getrennten und somit unzerstörten Zustand sind die Gehäuseteile elektrisch und mechanisch miteinander verbunden.

Zur leichten lösbaren Verbindung und zum Längenausgleich, insbesondere infolge von Laständerungen auf der Leitung sind bevorzugt die Gehäuseteile endseitig jeweils mittels eines zugehörigen Gelenks drehbar gelagert, insbesondere aufgehängt. Das jeweilige Gelenk weist dabei eine quer zur Längsachse der Gehäuseteile verlaufende Schwenkachse auf und ist als ein Kugelgelenk, Kreuzgelenk oder Drehgelenk ausgebildet.

Die Kombination von end- und somit beidseitig drehgelagerten Gehäuseteilen und Anordnung dieser in einem Winkel zueinander sind durch Laständerungen bedingte Längenänderungen einfach und sicher ausgleichbar.

Zum Anschluss des Gehäuses an die Erdleitung ist bevorzugt eines der äußeren drehgelagerten Enden eines der Gehäuseteile erdseitig aufgehängt.

Zum Anschluss des Gehäuses an wenigstens einen aktiven Leiter ist bevorzugt eines der äußeren drehgelagerten Enden eines der Gehäuseteile spannungsseitig, insbesondere hochspannungsseitig, aufgehängt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch ein Ausführungsbeispiel für einen Überspannungsableiter mit zwei Gehäuseteilen und eine dazwischen angeordnete Trennvorrichtung im geschlossenen und somit nicht getrennten Zustand, und
- FIG 2: schematisch einen Überspannungsableiter mit zwei Gehäuseteilen und eine dazwischen angeordnete Trennvorrichtung im offenen und somit getrennten Zustand.

Einander entsprechende Teile sind in den Figuren mit den gleichen Bezugszeichen versehen.

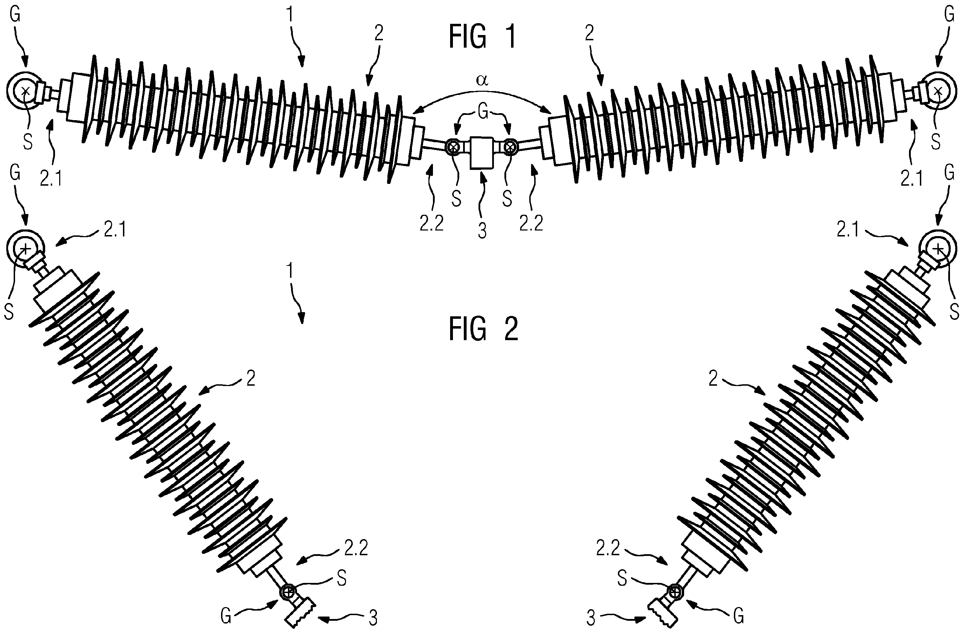

Figur 1 zeigt schematisch einen Überspannungsableiter 1 zum Schutz gegen Überspannungen beispielsweise infolge von indirekten oder direkten Blitzeinschlägen in einer Anlage oder Schaltüberspannungen.

Ein solcher Überspannungsableiter 1, auch kurz Ableiter genannt, wird beispielsweise in Freileitungen parallel zu einem nicht näher dargestellten Isolator aufgehängt.

Der Überspannungsableiter 1 ist geteilt ausgebildet und umfasst zwei Gehäuseteile 2 für einen nicht näher dargestellten Durchgangswiderstand, beispielsweise Metalloxid-Widerstand.

Zwischen den zwei Gehäuseteilen 2 ist eine Trennvorrichtung 3 angeordnet. Der geteilte Überspannungsableiter 1 ist für eine Spannungsebene ausgelegt, z. B. für 96 kV, 110 kV oder 145 kV.

Die Trennvorrichtung 3 dient dazu, bei einem Fehler den aktiven Leiter oder Anschlusspfad durch Trennung der Gehäuseteile 2 zu unterbrechen. Dazu kann die Trennvorrichtung 3 beispielsweise eine Schaltstrecke aufweisen, die eine irreversible Auftrennung des Anschlusspfades bewirkt. Zum irreversiblen Auftrennen kann beispielsweise eine Treibladung dienen, welche die Verbindung zwischen den Gehäuseteilen 2 durch Auftrennen der Trennvorrichtung 3 selbst punktuell zerstört. Vorteilhaft kann die Trennvorrichtung 3 eine rotationssymmetrische Struktur aufweisen, die in die Verbindung zwischen den Gehäuseteilen 2 eingefügt ist.

Die voneinander abgewandten und somit äußeren Enden 2.1 der Gehäuseteile 2 weisen Anschlussklemmen für wenigstens einen nicht näher dargestellten aktiven Leiter und für die nicht näher dargestellte Erdung auf. Darüber hinaus sind die Gehäuseteile 2 an ihren äußeren Enden 2.1 drehbar gelagert, insbesondere aufgehängt.

Die einander zugewandten und somit inneren Enden 2.2 der Gehäuseteile 2 sind lösbar mittels der Trennvorrichtung 3 miteinander verbunden.

Die Trennvorrichtung 3 ist in Figur 1 im nicht getrennten Zustand gezeigt.

Die Trennvorrichtung 3 verbindet die Gehäuseteile 2 mittig miteinander, wodurch die Trennvorrichtung 3 fast ausschließlich auf Zug beansprucht wird.

Darüber hinaus sind die Gehäuseteile 2 bei nicht getrennter Trennvorrichtung 3 in einem vorgegebenen Winkel α kleiner 180° zueinander angeordnet, wodurch auf einfache Art und Weise ein Längenausgleich bewirkt wird.

Die Trennvorrichtung 3 verbindet die Gehäuseteile 2 lösbar miteinander. Mittels der Trennvorrichtung 3 im geschlossenen und somit nicht getrennten Zustand sind die Gehäuseteile 2 elektrisch und mechanisch miteinander verbunden.

Endseitig ist die Trennvorrichtung 3 am jeweils zugehörigen Gehäuseteil 2 drehbar gelagert.

Zur leichten trennbaren Verbindung sind die Gehäuseteile 2 endseitig, sowohl am inneren Ende 2.2 als auch am äußeren Ende 2.1, jeweils mittels eines zugehörigen Gelenks G drehbar gelagert, insbesondere aufgehängt. Das jeweilige Gelenk G weist eine quer zur Längsachse der Gehäuseteile 2 verlaufende Schwenkachse S auf.

Das jeweilige Gelenk G ist als ein Drehgelenk ausgebildet. Alternativ kann das Gelenk G in nicht näher dargestellter Art und Weise als ein Kugelgelenk oder Kreuzgelenk ausgebildet sein.

Durch die an den äußeren Enden 2.1 und inneren Enden 2.2 der Gehäuseteile 2 drehbare Lagerung und die an den inneren Enden 2.2 der Gehäuseteile 2 trennbare Verbindung der Gehäuseteile 2 können diese bei Auslösung und somit Auftrennung der Trennvorrichtung 3 einfach und sicher voneinander getrennt werden, indem die Gehäuseteile 2 wegschwenken oder wegklappen in Richtung zur Erdungsseite oder zur Spannungsseite, wie in Figur 2 dargestellt.

Dabei zeigt Figur 2 den Überspannungsableiter 1 mit zwei Gehäuseteilen 2 und der dazwischen angeordneten Trennvorrichtung 3 im offenen und somit getrennten Zustand der Trennvorrichtung 3. Dabei wird im Fehlerfall beispielsweise eine nicht näher dargestellte Treibladung in der Trennvorrichtung 3 ausgelöst, wodurch die Trennvorrichtung 3 definiert aufgetrennt und somit zerstört wird, so dass die Gehäuseteile 2 voneinander getrennt werden und wegschwenken.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Überspannungsableiter (1), insbesondere zum Ableiten von Überspannungen, aufweisend ein Gehäuse und eine Trennvorrichtung (3),
wobei das Gehäuse in mindestens zwei Gehäuseteile (2) unterteilt ist und
die Trennvorrichtung (3) die Gehäuseteile (2) miteinander verbindet,
wobei die Trennvorrichtung (3) dazu ausgebildet ist, bei einem Fehler einen aktiven Leiter oder Anschlusspfad durch Trennung der Gehäuseteile (2) zu unterbrechen, wobei
im Fehlerfall eine Treibladung in der Trennvorrichtung 3 ausgelöst wird, wodurch die Trennvorrichtung 3 definiert aufgetrennt und somit zerstört wird, so dass die Gehäuseteile 2 voneinander getrennt werden und wegschwenken.

2. Überspannungsableiter (1) nach Anspruch 1,
**dadurch gekennzeichnet, dass** die Trennvorrichtung (3) die Gehäuseteile (2) mittig miteinander verbindet.

3. Überspannungsableiter (1) nach Anspruch 1 oder 2,
**dadurch gekennzeichnet, dass** die Gehäuseteile (2) in einem vorgegebenen Winkel (α) kleiner 180° bei geschlossener Trennvorrichtung (3) zueinander angeordnet sind.

4. Überspannungsableiter (1) nach einem der vorhergehenden Ansprüche,
**dadurch gekennzeichnet, dass** die Trennvorrichtung (3) endseitig am jeweils zugehörigen Gehäuseteil (2) drehbar gelagert ist.

5. Überspannungsableiter (1) nach einem der vorhergehenden Ansprüche,
**dadurch gekennzeichnet, dass** die Trennvorrichtung (3) die beiden Gehäuseteile (2) mechanisch und elektrisch miteinander verbindet.

6. Überspannungsableiter (1) nach einem der vorhergehenden Ansprüche,
**dadurch gekennzeichnet, dass** die Gehäuseteile (2) endseitig jeweils mittels eines zugehörigen Gelenks (G) drehbar gelagert, insbesondere aufgehängt sind.

7. Überspannungsableiter (1) nach Anspruch 6,
**dadurch gekennzeichnet, dass** das jeweilige Gelenk (G) eine quer zur Längsachse der Gehäuseteile (2) verlaufende Schwenkachse (S) aufweist.

8. Überspannungsableiter (1) nach Anspruch 6 oder 7,
**dadurch gekennzeichnet, dass** das jeweilige Gelenk (G) als ein Kugelgelenk, Kreuzgelenk oder Drehgelenk ausgebildet ist.

9. Überspannungsableiter (1) nach einem der Ansprüche 6 bis 8,
**dadurch gekennzeichnet, dass** eines der äußeren drehgelagerten Enden (2.1) eines der Gehäuseteile (2) erdseitig aufgehängt ist.

10. Überspannungsableiter (1) nach einem der Ansprüche 6 bis 9,
**dadurch gekennzeichnet, dass** eines der äußeren drehgelagerten Enden (2.1) eines der Gehäuseteile (2) spannungsseitig, insbesondere hochspannungsseitig, aufgehängt ist.

## Claims

1. Surge arrester (1), in particular for arresting surges, having a housing and a disconnecting device (3),
wherein the housing is subdivided into at least two housing parts (2) and
the disconnecting device (3) connects the housing parts (2) to one another,
wherein the disconnecting device (3) is configured, in the event of a fault, to interrupt an active conductor or connection path by disconnecting the housing parts (2), wherein
in the case of a fault, a propellant charge in the disconnecting device (3) is triggered, as a result of which the disconnecting device (3) is disconnected in a defined manner and thus destroyed, such that the housing parts (2) are disconnected from one another and pivot away from one another.

2. Surge arrester (1) according to Claim 1,
**characterized in that** the disconnecting device (3) connects the housing parts (2) to one another centrally.

3. Surge arrester (1) according to Claim 1 or 2,
**characterized in that** the housing parts (2) are arranged at a predefined angle (α) of less than 180° with respect to one another when the disconnecting device (3) is closed.

4. Surge arrester (1) according to any of the preceding claims,
**characterized in that** the disconnecting device (3) is mounted rotatably at the end side on the respectively associated housing part (2).

5. Surge arrester (1) according to any of the preceding claims,
**characterized in that** the disconnecting device (3) mechanically and electrically connects the two housing parts (2) to one another.

6. Surge arrester (1) according to any of the preceding claims,
**characterized in that** the housing parts (2) are mounted, in particular suspended, rotatably at the end side in each case by means of an associated joint (G).

7. Surge arrester (1) according to Claim 6,
**characterized in that** the respective joint (G) has a pivoting axis (S) running transversally with respect to the longitudinal axis of the housing parts (2).

8. Surge arrester (1) according to Claim 6 or 7,
**characterized in that** the respective joint (G) is embodied as a ball-and-socket joint, universal joint or rotary joint.

9. Surge arrester (1) according to any of Claims 6 to 8,
**characterized in that** one of the outer rotationally mounted ends (2.1) of one of the housing parts (2) is suspended on the ground side.

10. Surge arrester (1) according to any of Claims 6 to 9,
**characterized in that** one of the outer rotationally mounted ends (2.1) of one of the housing parts (2) is suspended on the voltage side, in particular on the high voltage side.

## Revendications

1. Parafoudre (1), notamment pour décharger des surtensions, ayant un boîtier et un dispositif (3) de séparation,
le boîtier étant ensuite subdivisé en au moins deux parties (2) et
le dispositif (3) de séparation reliant entre elles les parties (2) du boîtier,
dans lequel
le dispositif (3) de séparation est constitué pour, s'il se produit un défaut, interrompre un conducteur actif ou un trajet de connexion par séparation des parties (2) du boîtier, dans lequel
dans le cas d'un défaut, une charge propulsive est déclenchée dans le dispositif (3) de séparation, grâce à quoi le dispositif (3) de séparation est séparé d'une manière définie et ainsi détruit, de sorte que les parties (2) du boîtier sont séparées l'une de l'autre et s'éloignent en pivotant.

2. Parafoudre (1) suivant la revendication 1,
**caractérisé en ce que** le dispositif (3) de séparation relie les parties (2) du boîtier entre elles au milieu.

3. Parafoudre (1) suivant la revendication 1 ou 2,
**caractérisé en ce que** les parties (2) du boîtier font, entre elles, un angle (α) donné à l'avance plus petit que 180° lorsque le dispositif (3) de séparation est fermé.

4. Parafoudre (1) suivant l'une des revendications précédentes,
**caractérisé en ce que** le dispositif (3) de séparation est monté tournant du côté de l'extrémité sur la partie (2) du boîtier associée, respectivement.

5. Parafoudre (1) suivant l'une des revendications précédentes,
**caractérisé en ce que** le dispositif (3) de séparation relie les deux parties (2) du boîtier entre elles, mécaniquement et électriquement.

6. Parafoudre (1) suivant l'une des revendications précédentes,
**caractérisé en ce que** les parties (2) du boîtier sont montées tournantes en étant notamment suspendues, du côté de l'extrémité, respectivement, au moyen d'une articulation (G) associée.

7. Parafoudre (1) suivant la revendication 6,
**caractérisé en ce que** l'articulation (G) respective a un axe (S) de pivotement s'étendant transversalement à l'axe longitudinal des parties (2) du boîtier.

8. Parafoudre (1) suivant la revendication 6 ou 7,
**caractérisé en ce que** l'articulation (G) respective est constituée sous la forme d'une rotule, d'un joint de cardan ou d'une articulation tournante.

9. Parafoudre (1) suivant l'une des revendications 6 à 8,
**caractérisé en ce que** l'une des extrémités (2.1) extérieures montées tournantes de l'une des parties (2) du boîtier est suspendue du côté de l'extrémité.

10. Parafoudre (1) suivant l'une des revendications 6 à 9,
**caractérisé en ce que** l'une des extrémités (2.1) extérieures montées tournantes de l'une des parties (2) du boîtier est suspendue du côté de la tension, notamment du côté de la haute tension.
